# EUROPÄISCHE PATENTSCHRIFT

(11) **EP 0 937 110 B1**
(45) Veröffentlichungstag und Bekanntmachung des Hinweises auf die Patenterteilung: **24.01.2001**
(21) Anmeldenummer: 97950076.6
(22) Anmeldetag: 03.11.1997
(51) Int. Cl.: C08G 18/36, C08G 18/64, C09D 175/04

(54) **VERWENDUNG VON POLYOLEN FÜR ISOCYANAT-GIESSHARZE UND -BESCHICHTUNGSMASSEN**
USE OF POLYOLS FOR ISOCYANATE CASTING RESINS AND COATING COMPOUNDS
UTILISATION DE POLYOLS POUR RESINES COULABLES ET MATIERES DE REVETEMENT A BASE D'ISOCYANATE

(30) Priorität: 11.11.1996 DE 19646424
(43) Veröffentlichungstag der Anmeldung: 25.08.1999
(73) Patentinhaber: Cognis Deutschland GmbH, 40589 Düsseldorf (DE)
(72) Erfinder: HEIDBREDER, Andreas, D-40593 Düsseldorf (DE); GRÜTZMACHER, Roland, D-42489 Wülfrath (DE); NAGORNY, Ulrich, D-40721 Hilden (DE); WESTFECHTEL, Alfred, D-40724 Hilden (DE)
(86) Internationale Anmeldenummer: EP9706054
(87) Internationale Veröffentlichungsnummer: WO9821255

(56) Entgegenhaltungen:
- EP-A- 0 260 499
- DE-A- 3 347 045
- DE-A- 4 308 097

## Beschreibung

### Gebiet der Erfindung

Die Erfindung betrifft die Verwendung spezieller Polyole zur Herstellung von Isocyanat-Gießharzen und -Beschichtungsmassen. Die erfindungsgemäß einzusetzenden Polyole sind dadurch erhältlich, daß man epoxidierte Fettsäureester monofunktioneller C₁₋₈-Alkohole mit Alkoholen einer Funktionalität im Bereich von 2 bis 10 umsetzt. Dabei sind erfindungsgemäß solche epoxidierten Fettsäureester einzusetzen, denen als Fettsäurekomponente Fettsäuregemische zugrunde liegen, die im wesentlichen 18 C-Atome aufweisen, wobei der Gehalt der Fettsäuregemische an Ölsäure mindestens 80 Gew.-% beträgt.

### Stand der Technik

Gießharze sind flüssige oder durch mäßige Erwärmung verflüssigbare synthetische Harze, die in offene Formen gegossen werden und dort erhärten. Zu den Gießharzen zählen auch Isocyanat-Gießharze. Darunter werden nach DIN 55958 Kunstharze verstanden, die auf aliphatischen, cycloaliphatischen oder aromatischen Isocyanaten basieren und noch freie Isocyanat-Endgruppen enthalten. Ihre Aushärtung kann unter verschiedenen Bedingungen erfolgen. So besteht beispielsweise ein einkomponentiges Gießharz aus einem Polyurethan-Prepolymeren mit endständigen freien oder blockierten Isocyanat-Gruppen, die bei Feuchtigkeitseinwirkung aushärten, wobei eine Erwärmung erfolgen kann, um z. B. die Reaktion zu beschleunigen oder die Festigkeit zu erhöhen. Ein zweikomponentiges Gießharz basiert beispielsweise auf Polyhydroxyverbindungen von verzweigten Polyestern oder Polyethern als erster Komponente und auf Polyisocyanaten als zweiter Komponente. Nach dem Mischen beider Komponenten härten sie bei Raumtemperatur oder leicht erhöhter Temperatur aus. Derartige zweikomponentige Gießharze werden beispielsweise für den Verguß von Kabelarmaturen verwendet.

Gemäß der Lehre der **DE-A-43 08 097** lassen sich Isocyanat-Gießharze bzw. -Beschichtungsmassen, welche gegenüber Feuchtigkeit und Chemikalien weitgehend unempfindlich sind, herstellen, indem man als Polyole Ringöffnungs- und Umesterungsprodukte von epoxidierten Fettsäureestern monofunktioneller C₁₋₈-Alkohole einsetzt. Diese Produkte sind zugänglich, indem man die epoxidierten Fettsäureester mit Alkoholen einer Funktionalität, die vorzugsweise im Bereich von 2 bis 4 liegt, umsetzt. Gemäß den Herstellungsbeispielen 1 bis 5 der genannten DE-A-43 08 097 wird als Ausgangsmaterial jeweils ein Epoxystearinsäuremethylester technischer Qualität eingesetzt. Wie dem Fachmann bekannt, ist unter "technischer Qualität" zu verstehen, daß die dem Epoxystearinsäuremethylester zugrunde liegende Fettsäurekomponente eine Mischung von im wesentlichen Palmitinsäure, Stearinsäure, Ölsäure und Linolsäure ist, wobei der Anteil der Ölsäure - bezogen auf die gesamte Fettsäuremischung - bei ca. 70 Gew.-% liegt. Ein derartiges Fettsäuregemisch ist seit langem unter dem Namen Edenor^{R} TiO5 im Handel erhältlich (Hersteller: Henkel KGaA).

Die Polyole gemäß der DE-A-43 08 097 weisen nun zwar eine Reihe anwendungstechnischer Vorteile auf, stellen jedoch in der Regel leicht gelblich gefärbte Flüssigkeiten dar. Die gelbe Farbe dieser Produkte ist unproblematisch bei Anwendungen im Bereich der Gießharze, Decklacke oder Beschichtungen, sofern die Polyole mit aromatischen Diisocyanaten umgesetzt werden. Bei der Umsetzung mit farblosen aliphatischen Diisocyanaten ist sie jedoch störend. Gemäß **DE-A-44 46 877** wird vorgeschlagen, die Ringöffnung von Epoxiden in Gegenwart von Fluoralkansulfonsäuren als Katalysator durchzuführen. Auf diese Weise wird eine Verbesserung der Farbqualität der so hergestellten Polyole erreicht.

Aus **DE-A-40 24 364** ist ein Verfahren zur Herstellung von Kunststoffcomonomeren und Kunststoffen aus Fetten und Ölen mit ungesättigten Fettsäuren bekannt, wobei man rohe ungesättigte Fette und Öle mit Perameisensäure oder Peressigsäure zu Epoxy- oder Hydroxyverbindungen oxidiert und zur Herstellung von Kunststoffen anschließend mit bi- oder multifunktionellen Verbindungen, die zur Reaktion mit Epoxy- und Hydroxygruppen in der Lage sind, zu Polymeren umsetzt.

### Beschreibung der Erfindung

Aufgabe der vorliegenden Erfindung war es, Polyole bereitzustellen, die bei der Verwendung zur Herstellung von Isocyanat-Gießharzen und - Beschichtungsmassen einerseits an sich bereits eine gute Farbqualität aufweisen, andererseits eine verbesserte Farbstabilität bei der Lagerung der entsprechenden Isocyanat-Gießharze und -Beschichtungsmassen aufweisen.

Überraschenderweise wurde nun gefunden, daß diese Aufgabe durch Polyole gelöst wird, die erhältlich sind durch Umsetzung von epoxidierten Fettsäureestern monofunktioneller C₁₋₈-Alkohole mit aliphatischen Alkoholen einer Funktionalität im Bereich von 2 bis 10, wobei den epoxidierten Fettsäureestern als Fettsäurekomponente Fettsäuregemische zugrunde liegen, die im wesentlichen 18 C-Atome aufweisen und wobei der Gehalt dieser Fettsäuregemische an Ölsäure - bezogen auf die gesamte Fettsäuremischung - mindestens 80 Gew.-% beträgt.

Zur Verdeutlichung der Herstellung der erfindungsgemäßen Polyole sei auf das nachstehende Schema 1 verwiesen. In diesem Schema bedeutet der Rest R einen C₁₋₈-Alkylrest. Die obere Formel in Schema 1 bedeutet dann einen Ölsäurealkylester. Dieser weist in der Fettkette in 9,10-Position eine C=C-Doppelbindung auf. Diese Doppelbindung ist einer Epoxidierung zugänglich, wobei dann - wie in der zweiten Formel von Schema 1 dargestellt - der zugehörige epoxidierte Ölsäurealkylester entsteht. Dieser wird anschließend mit aliphatischen Alkoholen einer Funktionalität im Bereich von 2 bis 10 unter Bildung eines entsprechenden Polyols umgesetzt.

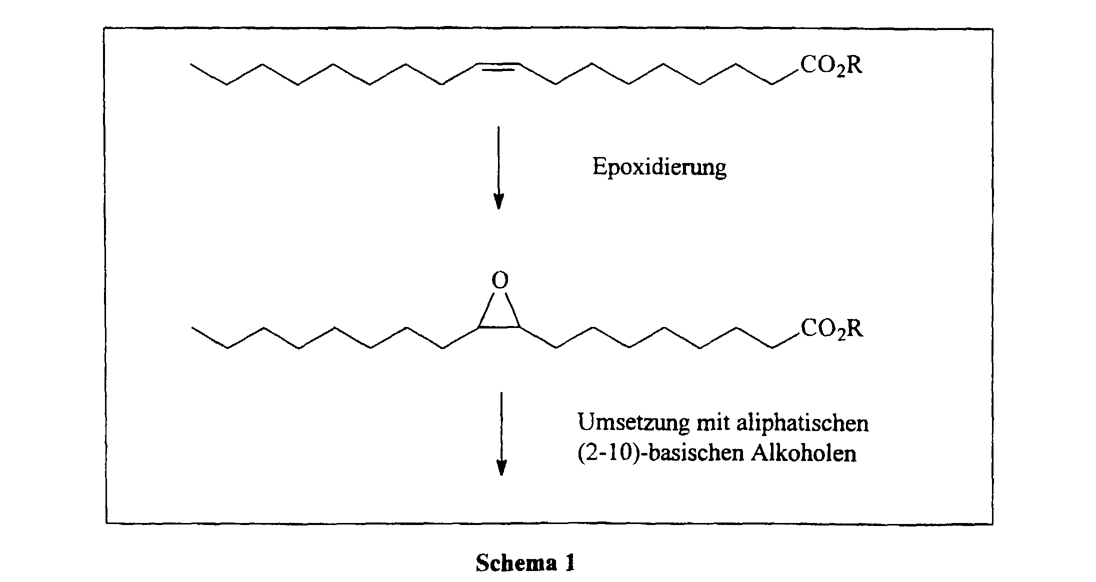

Wenn man nun in der ersten Formel von Schema 1, die in dieser konkreten Ausgestaltung für einen Ölsäurealkylester steht, den speziellen Fettalkylrest, das heißt die Fettkomponente des Fettsäureesters, durch ein Fettsäuregemisch ersetzt, die im wesentlichen 18 C-Atome aufweist und wobei der Gehalt dieses Fettsäuregemische an Ölsäure - bezogen auf die gesamte Fettsäuremischung - mindestens 80 Gew.-% beträgt, und diese Transformation sinngemäß auch auf die zweite Formel von Schema 1 anwendet, wobei diesmal naturgemäß nicht ein Fettalkylrest, sondern ein Epoxy-Fettalkylrest zu ersetzen ist, dann erhielte man ein allgemeines Schema, das die Herstellung der erfindungsgemäßen Polyole beschreibt.

Gegenstand der vorliegenden Erfindung ist daher die Verwendung von Polyolen, die erhältlich sind durch Umsetzung von epoxidierten Fettsäureestern monofunktioneller C₁₋₈-Alkohole mit aliphatischen Alkoholen einer Funktionalität im Bereich von 2 bis 10, wobei den epoxidierten Fettsäureestern als Fettsäurekomponente Fettsäuregemische zugrunde liegen, die im wesentlichen 18 C-Atome aufweisen und wobei der Gehalt dieser Fettsäuregemische an Ölsäure - bezogen auf die gesamte Fettsäuremischung - mindestens 80 Gew.-% beträgt, zu Herstellung von Isocyanat-Gießharzen und -Beschichtungsmassen.

Im Rahmen der vorliegenden Erfindung werden zur Herstellung der Polyole, wie bereits gesagt, epoxidierte Fettsäureester mit aliphatischen Alkoholen einer Funktionalität im Bereich von 2 bis 10 umgesetzt. Diese Umsetzung erfolgt gemäß der Lehre der DE-A-43 08 097 im Sinne einer Ringöffnung und Umesterung. Bevorzugt sind hier die Ringöffnungs- und Umesterungsprodukte mit Alkoholen einer Funktionalität im Bereich von 2 bis 7, insbesondere die Umsetzungsprodukte mit Ethylenglykol, Propylenglykol, oligomeren Ethylenglykolen, oligomeren Propylenglykolen, ferner die Umsetzungsprodukte mit Glycerin, Diglycerin, Polyglycerin, Trimethylolpropan, Di-Trimethylolpropan und/oder Pentaerythrit. Die Herstellung derartiger Produkte kann nach bekannten Verfahren erfolgen, wobei die Umesterung während oder nach dem Ringöffnungsschritt durch Entfernen des niederen Alkohols aus dem Reaktionsgleichgewicht durchgeführt werden kann. Bevorzugt sind Ringöffnungs- und Umesterungsprodukte, bei denen ein Verhältnis zwischen epoxidiertem Fettsäureester und dem zur Umsetzung verwendeten Alkohol von 1:1 bis 1:10 angewandt wird. In Analogie zu den Öffnungsprodukten epoxidierter Fettalkohole sind auch hier 1:1 - oder 1:2 - Addukte herstellbar.

In einer bevorzugten Ausführungsform der vorliegenden Erfindung setzt man als Basis der epoxidierten Fettsäureester als Fettsäurekomponente Fettsäuregemische aus Sonnenblumenöl neuer Züchtung ein. Die Fettsäurezusammensetzung von Sonnenblumenöl neuer Züchtung ist wie folgt: 80 bis 95 Gew.-% Ölsäure, 2 bis 12 % Linolsäure, 1 bis 5 % Stearinsäure, 2 bis 5 % Palmitinsäure. Dabei sind alle %-Angaben als Gew.-% bezogen auf die gesamte Fettsäuremischung zu verstehen. Erfindungsgemäß sind solche epoxidierten Fettsäureester besonders bevorzugt, denen als Fettsäurekomponente Fettsäuregemische aus Sonnenblumenöl neuer Züchtung zugrunde liegen und bei denen der Gehalt dieser Fettsäuregemische an Ölsäure mindestens 85 Gew.-% beträgt. Ein derartiges Öl ist kommerziell beispielsweise unter der Bezeichnung "Trisun®" von der Firma Special Vegetable Oils (SVO), Eastlake, Ohio, USA, erhältlich.

In einer weiterer Ausführungsform der vorliegenden Erfindung setzt man als Basis der epoxidierten Fettsäureester ein sogenanntes "high-oleic, low stearic" Sonnenblumenöl - abkürzend als HOLS-Sonnenblumenöl bezeichnet - ein. Die Fettsäure-Zusammensetzung von HOLS-Sonnenblumenöl ist dabei wie folgt: 85 bis 95 % Ölsäure, 2 bis 8 % Linolsäure, 0,5 bis 2,5 % Stearinsäure und 2 bis 5 % Palmitinsäure. Auch hier sind alle %-Angaben als Gew.-% bezogen auf die gesamte Fettsäuremischung zu verstehen.

Ein weiterer Gegenstand der Erfindung sind Isocyanat-Gießharze und -Beschichtungsmassen, die erhältlich sind durch Umsetzung der geschilderten erfindungsgemäßen Polyole mit Isocyanaten einer Funktionalität im Bereich von 2 bis 4.

Zur Herstellung der erfindungsgemäßen Isocyanat-Gießharze und -Beschichtungsmassen eignen sich sowohl aromatische als auch aliphatische, monocyclische wie polycyclische Isocycanat-Verbindungen der genannten Funktionalität. So kann in einer ersten Ausführungsform als aromatisches Isocyanat Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen größer als 2. Ein weiteres geeignetes aromatisches Diisocyanat ist Xylylendiisocyanat. Darüber hinaus kann eine Vielzahl aliphatischer Isocyanate eine Funktionalität von 2 oder mehr eingesetzt werden. Beispiele sind hier Isophorondiisocyanat, tris(6-Isocyanatohexyl)isocyanat und Dicyclohexylmethandiisocyanat als cyclische aliphatische Diisocyanate. Weitere Beispiele sind aliphatische, geradkettige Diisocyanate, wie sie durch Phosgenisierung von Diaminen gewonnen werden, zum Beispiel Tetramethylendiisocyanat oder Hexamethylendiisocyanat.

Im Rahmen der vorliegenden Erfindung ist es besonders bevorzugt, zur Herstellung der Gießharze bzw. Beschichtungen als Isocyanat-Komponente Hexamethylendiisocyanat einzusetzen.

Als Isocyanat-Komponente in den erfindungsgemäßen Zweikomponenten-Gießharzen können außer den mehrfunktionellen Isocyanatverbindungen an sich auch Prepolymere eingesetzt werden. Unter Prepolymeren werden hier die Addukte mehrfunktioneller Isocyanate an mehrfunktionelle Alkohole, etwa die Umsetzungsprodukte eines der vorgenannten aromatischen oder aliphatischen Diisocyanate mit Ethylenglykol, Propylenglykol, Glycerin, Trimethylolpropan oder Pentaerythrit verstanden. Auch Umsetzungsprodukte von Diisocyanaten mit Polyetherpolyolen, z. B. Polyetherpolyolen auf Basis Polyethylenoxid oder auf Basis Polypropylenoxid können als Prepolymere verwendet werden.

Die Zweikomponenten-Gießharze und -Beschichtungsmassen können weiterhin verschiedene Hilfsstoffe enthalten, die vorzugsweise dem Polyol zugemischt werden. Verwendet werden können hier z. B. Füllstoffe. Als Füllstoffe geeignet sind gegenüber Isocyanaten nicht reaktive, anorganische Verbindungen, beispielsweise Kreide und Gips, gefällte Kieselsäure, Zeolithe, Bentonite, gemahlene Mineralien sowie andere, dem Fachmann bekannte anorganische Füllstoffe. Weiterhin können auch organische Füllstoffe verwendet werden, insbesondere Faserkurzschnitte und anderes. Bevorzugt sind Füllstoffe, die den Gießharzen Thixotropie verleihen.

Die erfindungsgemäßen Zweikomponenten-Gießharze bzw. -Beschichtungsmassen können weiterhin Beschleuniger enthalten. Geignet sind beispielsweise tertiäre Basen wie Bis-(N,N-dimethylamino)-diethylether, Dimethylaminocyclohexan, N,N-Dimethyl-benzylamin, N-Methylmorpholin sowie die Umsetzungsprodukte von Dialkyl-(β-hydroxyethyl)-amin mit Monoisocyanaten und Veresterungsprodukte von Dialkyl-(β-hydroxyethyl)-amin und Dicarbonsäuren. Ein weiterer Beschleuniger ist das 1,4-Diamino-bicyclo-(2.2.2)-octan. Ferner können nichtbasische Substanzen als Beschleuniger verwendet werden. Hier seien Metallverbindungen genannt, beispielsweise Eisenpentacarbonyl, Nickeltetracarbonyl, Eisenacetylacetonat sowie Zinn-(II)-(2-ethylhexoat), Dibutylzinndilaurat oder Molybdänglykolat.

Außer den genannten Verbindungen können die Gießharze und Beschichtungsmassen noch weitere Hilfsstoffe enthalten. Zu erwähnen sind hier Lösungsmittel. Geeignet sind Lösungsmittel, die ihrerseits nicht mit Isocyanatgruppen reagieren, beispielsweise halogenierte Kohlenwasserstoffe, Ester, Ketone, aromatische Kohlenwasserstoffe und andere. Weiterhin können Weichmacher, Flammschutzmittel, Verzögerer, Farbstoffe und Alterungsschutzmittel, wie sie in den entsprechenden Gießharzen bekannt sind, mit eingearbeitet werden.

Die erfindungsgemäßen Polyole können durch andere Polyole in einem Ausmaß von bis zu 80 % ersetzt werden. Es ist jedoch bevorzugt, die erfindungsgemäß einzusetzenden Polyole unvermischt einzusetzen.

Die folgenden Beispiele dienen der Verdeutlichung der Erfindung und sind nicht einschränkend zu verstehen.

### Beispiele

### Eingesetzte Rohstoffe

**Edenor MeTi05:** Fettsäuremethylestermischung auf Basis eines Fettsäuregemisches der Zusammensetzung: 5 % Palmitinsäure, 1 % Stearinsäure, 67 % Ölsäure, 11 % Linolensäure (Fa. Henkel KGaA).
Edenor MeTi05 ist Rohstoff zur Herstellung eines Polyols für Vergleichszwecke.

**Priolube 1400:** Fettsäuremethylestermischung auf Basis eines Fettsäuregemisches der Zusammensetzung: 5 % Palmitinsäure, 2 % Stearinsäure, 67 % Ölsäure, 9 % Linolsäure (Fa. Unichema).
Priolube 1400 ist Rohstoff zur Herstellung eines Polyols für Vergleichszwecke.

**NSb-Me-Ester:** Fettsäuremethylestermischung auf Basis eines Fettsäuregemisches (ex Sonnenblumenöl neuer Züchtung) der Zusammensetzung: 5 % Palmitinsäure, 5 % Stearinsäure, 85 % Ölsäure, 4 % Linolsäure.
NSb-Me-Ester ist Rohstoff zur Herstellung eines erfindungsgemäßen Polyols.

### Herstellung der Polyole

Die oben unter dem Punkt "eingesetzte Rohstoffe" genannten Fettsäuremethylestermischungen wurden jeweils an den C=C-Doppelbindungen nach herkömmlichen Methoden in Gegenwart saurer Katalysatoren epoxidiert. Die Epoxide wurden anschließend jeweils mit Trimethylolpropan umgesetzt. Dabei betrug das Einsatzverhältnis der Fettsäuremethylestermischungen zu Trimethylolpropan 1:0,8 (bezogen auf Epoxidzahl und OH-Zahl). Eine Übersicht der bei diesen Umsetzungen erhaltenen Produkte ist aus Tabelle I zu untnehmen:

**Tabelle I**

| **Rohstoff** | **Epoxid** | **Polyol** |
|---|---|---|
| MeTiO5 | EpO = 4,76 | OHZ = 313 |
| | VZ = 185 | SZ = 0,8 |
| | IZ = 1,6 | COZ = 4,1 |
| | SZ = 0,6 | Farbe: 3 gelb |
| | | 0,2 rot |
| | | 0,1 neutral |
| NSB-Me-Ester | EPO = 4,48 | OHZ = 294 |
| | VZ = 188 | SZ = 0,6 |
| | IZ = 2,2 | COZ = 5,2 |
| | SZ = 0,6 | Farbe: 0,3 gelb |
| | | 0 rot |
| | | 0 neutral |
| Priolube 1400 | EpO = 4,45 | OHZ = 315 |
| | VZ = 190 | SZ = 0,9 |
| | IZ = 5,1 | COZ = 5,6 |
| | SZ = 0,9 | Farbe: 9 gelb |
| | | 0,9 rot |
| | | 0,1 neutral |

In Tabelle I bedeuten:
- EpO =: Epoxidzahl
- VZ =: Verseifungszahl
- IZ =: Jodzahl
- SZ =: Säurezahl
- OHZ =: OH-Zahl
- COZ =: Carbonyl-Zahl
- Farbe =: Farbwert nach Lovibond (5,25-Zoll-Küvette

### Anwendungstechnische Untersuchungen

Um die Eigenschaften der oben beschriebenen Poloyle zu prüfen, wurden Vergußmassen mit 1,6-Hexamethylendiisocyanat (HDI) und mit 1,6-Hexamethylendiisocyanat-trimer (HDT) hergestellt. Dabei wurden die Polyole mit HDI bzw. HDT jeweils im Verhältnis 1:1 eingesetzt (bezogen auf OH-Zahl und NCO-Zahl). Diese Produkte wurden bei 80 °C über mehrere Wochen gelagert. Die Gelbfärbung dieser Massen wurden zu Beginn und nach 1 und 2 Wochen visuell beurteilt und in ein Bewertungschema eingereiht, bei dem der Wert 0 für "farblos" und der Wert 10 für "stark gelb gefärbt" steht. Einzelheiten sind den Tabellen II und III zu entnehmen.

**Tabelle II**

| Vergußmassen auf Basis Polyol / HDI (Lagerung bei 80 °C) | | | |
|---|---|---|---|
| Polyol auf Basis | Farbe* | | |
| | zu Beginn | nach 1 Woche | nach 2 Wochen |
| MeTiO5 | 2 | 3 | 6 |
| Priolube 1400 | 3 | 5 | 9 |
| NSb-Me-Ester | 1 | 3 | 5 |

| | | | |
|---|---|---|---|
| *Farbskala: 0 = farblos; 10 = stark gelb gefärbt | | | |

**Tabelle III**

| Vergußmassen auf Basis Polyol HDT (Lagerung bei 80 °C) | | | |
|---|---|---|---|
| Polyol auf Basis | Farbe* | | |
| | zu Beginn | nach 1 Woche | nach 2 Wochen |
| MeTiO5 | 4 | 6 | 8 |
| Priolube 1400 | 5 | 9 | 10 |
| NSb-Me-Ester | 3 | 5 | 7 |

| | | | |
|---|---|---|---|
| * Farbskala: 0 = farblos; 10 = stark gelb gefärbt | | | |

Aus den Tabellen II und III geht hervor, daß die Gießharze auf Basis des erfindungsgemäßen Polyols deutlich bessere Farbwerte aufweisen als die entsprechenden Produkte auf Basis der nicht-erfindungsgemäßen Polyole.

## Patentansprüche

1. Verwendung von Polyolen, die erhältlich sind durch Umsetzung von epoxidierten Fettsäureestern monofunktioneller C₁₋₈-Alkohole mit aliphatischen Alkoholen einer Funktionalität im Bereich von 2 bis 10, wobei den epoxidierten Fettsäureestern als Fettsäurekomponente Fettsäuregemische zugrunde liegen, die im wesentlichen 18 C-Atome aufweisen und wobei der Gehalt dieser Fettsäuregemische an Ölsäure - bezogen auf die gesamte Fettsäuremischung - mindestens 80 Gew.-% beträgt, zur Herstellung von Isocyanat-Gießharzen und -Beschichtungsmassen.

2. Verwendung nach Anspruch 1, wobei den epoxidierten Fettsäureestern als Fettkomponente Fettsäuregemische aus Sonnenblumenöl neuer Züchtung zugrunde liegen.

3. Verwendung nach Anspruch 1 oder 2, wobei der Gehalt der den epoxidierten Fettsäureestern als Fettsäurekomponente zugrunde liegenden Fettsäuregemische an Ölsäure - bezogen auf die gesamte Fettsäuremischung - mindestens 85 Gew.-% beträgt.

4. Verwendung nach einem der Ansprüche 1 bis 3, wobei die zur Umsetzung mit den epoxidierten Fettsäureestern eingesetzten aliphatischen Alkohole ausgewählt sind aus der Gruppe Ethylenglykol, Propylenglykol, Glycerin, Trimethylolpropan und Pentaerythrit.

5. Isocyanat-Gießharze und -Beschichtungsmassen, erhältlich durch Umsetzung von Polyolen, die erhältlich sind durch Umsetzung von epoxidierten Fettsäureestern monofunktioneller C₁₋₈-Alkohole mit aliphatischen Alkoholen einer Funktionalität im Bereich von 2 bis 10, wobei den epoxidierten Fettsäureestern als Fettsäurekomponente Fettsäuregemische zugrunde liegen, die im wesentlichen 18 C-Atome aufweisen und wobei der Gehalt dieser Fettsäuregemische an Ölsäure - bezogen auf die gesamte Fettsäuremischung - mindestens 80 Gew.-% beträgt, mit Isocyanaten einer Funktionalität im Bereich von 2 bis 4.

## Claims

1. The use of polyols obtainable by reacting epoxidized fatty acid esters of monofunctional C₁₋₈ alcohols with aliphatic alcohols having a functionality of 2 to 10, the fatty acid component of the epoxidized fatty acid esters being based on fatty acid mixtures essentially containing 18 carbon atoms and the oleic acid content of these fatty acid mixtures, based on the fatty acid mixture as a whole, being at least 80% by weight, for the production of isocyanate casting resins and coating compositions.

2. The use claimed in claim 1, characterized in that the fatty acid component of the epoxidized fatty acid esters is based on fatty acid mixtures from sunflower oil from new plants.

3. The use claimed in claim 1 or 2, characterized in that the oleic acid content of the fatty acid mixtures on which the fatty acid component of the epoxidized fatty acids is based is at least 85% by weight, based on the fatty acid mixture as a whole.

4. The use claimed in any of claims 1 to 3, characterized in that the aliphatic alcohols used for the reaction with the epoxidized fatty acid esters are selected from the group consisting of ethylene glycol, propylene glycol, glycerol, trimethylol propane and pentaerythritol.

5. Isocyanate casting resins and coating compositions obtainable by reacting polyols obtainable by reacting epoxidized fatty acid esters of monofunctional C₁₋₈ alcohols with aliphatic alcohols having a functionality of 2 to 10, the fatty acid component of the epoxidized fatty acid esters being based on fatty acid mixtures essentially containing 18 carbon atoms and the oleic acid content of these fatty acid mixtures, based on the fatty acid mixture as a whole, being at least 80% by weight, with isocyanates having a functionality of 2 to 4.

## Revendications

1. Utilisation de polyols, qui sont obtenables par mise en réaction d'esters d'acides gras époxydés d'alcools monofonctionnels en C₁₋₈ avec des alcools aliphatiques dont la fonctionnalité est comprise dans l'intervalle de 2 à 10, le composant acide gras à la base des esters d'acides gras époxydés étant constitué de mélanges d'acides gras, qui présentent essentiellement 18 atomes de C et la concentration en acide oléique de ces mélanges d'acides gras - par rapport à la totalité du mélange d'acides gras - atteignant au moins 80 % en poids, pour la production de résines de coulée et de matières d'enduction à base d'isocyanates.

2. Utilisation selon la revendication 1, dans laquelle des mélanges d'acides gras d'huile de tournesol de nouvelle culture constituent le composant acide gras à la base des esters d'acides gras époxydés.

3. Utilisation selon la revendication 1 ou 2, dans laquelle le mélange d'acides gras constituant le composant acide gras à la base des esters d'acides gras époxydés présente une concentration en acide oléique - par rapport à la totalité du mélange d'acides gras - d'au moins 85 % en poids.

4. Utilisation selon une des revendications 1 à 3, dans laquelle les alcools aliphatiques mis en oeuvre pour la réaction avec les esters d'acides gras époxydés sont sélectionnés parmi le groupe formé de l'éthylèneglycol, du propylèneglycol, de la glycérine, du triméthylolpropane et du pentaérythrite.

5. Résines de coulée et matières d'enduction à base d'isocyanates obtenables par mise en réaction de polyols, lesquels sont obtenables par mise en réaction d'esters d'acides gras époxydés d'alcools monofonctionnels en C₁₋₈ avec des alcools aliphatiques dont la fonctionnalité est comprise dans l'intervalle de 2 à 10, le composant acide gras à la base des esters d'acides gras époxydés étant constitué de mélanges d'acides gras, qui présentent essentiellement 18 atomes de C et la concentration en acide oléique de ces mélanges d'acides gras - par rapport à la totalité du mélange d'acides gras - atteignant au moins 80 % en poids, avec des isocyanates présentant une fonctionnalité comprise dans l'intervalle de 2 à 4.
